(19) 

Europäisches
Patentamt

European
Patent Office

Office européen
des brevets

(11) **EP 4 663 471 A1**

(12) # EUROPÄISCHE PATENTANMELDUNG

(43) Veröffentlichungstag:
**17.12.2025   Patentblatt 2025/51**

(21) Anmeldenummer: **25180093.4**

(22) Anmeldetag: **02.06.2025**

(51) Internationale Patentklassifikation (IPC):
***B60L 58/27*** *(2019.01)*      ***H02M 7/487*** *(2007.01)*

(52) Gemeinsame Patentklassifikation (CPC):
**H02M 7/5387; B60L 58/27; H01M 10/486;**
**H01M 10/613; H01M 10/625; H01M 10/63;**
**H01M 10/667; H02M 7/487;** B60L 2210/10;
B60L 2210/30; B60L 2210/40; B60L 2240/525;
B60L 2240/545; H02M 1/327

(84) Benannte Vertragsstaaten:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Benannte Erstreckungsstaaten:
**BA**
Benannte Validierungsstaaten:
**GE KH LA MA MD TN**

(30) Priorität: **05.06.2024   DE 102024205194**

(71) Anmelder: **VOLKSWAGEN AG**
**38440 Wolfsburg (DE)**

(72) Erfinder:
• **Hartwig, Raphael**
**92342 Freystadt (DE)**
• **Schiedermeier, Maximilian**
**85139 Wettstetten (DE)**

(74) Vertreter: **Zucker, Volker**
**Patentanwälte Bressel und Partner mbB**
**Potsdamer Platz 10**
**10785 Berlin (DE)**

(54) **VORRICHTUNG UND VERFAHREN ZUM HEIZEN EINER TRAKTIONSBATTERIE IN EINEM ELEKTRO- ODER HYBRIDFAHRZEUG**

(57)    Die Erfindung betrifft eine Vorrichtung zum Heizen einer Traktionsbatterie (2) für ein Elektro- oder Hybridfahrzeug, wobei die Vorrichtung mindestens eine Einrichtung (7) zur Erfassung oder Ermittlung einer Temperatur der Traktionsbatterie (2), einen Kühlkreislauf (9) und mindestens eine elektrische Komponente mit mindestens einem GaN-Leistungstransistor (11) oder SiC-Leistungstransistor aufweist, wobei die Traktionsbatterie (2) und die elektrische Komponente mit dem Kühlkreislauf (9) thermisch gekoppelt sind, wobei in einem Betriebszustand der mindestens eine GaN- oder SiC-Leistungstransistor in Rückwärtsrichtung betrieben wird, wobei eine Steuereinrichtung (10) des mindestens einen GaN- oder SiC-Leistungstransistor derart ausgebildet ist, in Abhängigkeit der Temperatur der Traktionsbatterie (2) den GaN- oder SiC-Leistungstransistor für eine vorbestimmte Zeit in Rückwärtsrichtung keine Gate-Source-Spannung zuzuführen, wobei die vorbestimmte Zeit größer als eine initiale Delay-Zeit ist, sowie ein Verfahren.

Fig. 1

EP 4 663 471 A1

**Beschreibung**

Die Erfindung betrifft eine Vorrichtung und ein Verfahren zum Heizen einer Traktionsbatterie in einem Elektro- oder Hybridfahrzeug.

Aufgrund der Zellchemie der Batteriezellen in einer Traktionsbatterie ist die Leistungsfähigkeit bei kalten Temperaturen eingeschränkt. Daher ist es bekannt, bei geringen Außentemperaturen die Traktionsbatterie zu heizen, bis diese eine gewünschte Temperatur aufweist. Hierzu sind die verschiedensten Ansätze vorgestellt worden. Ein Ansatz ist beispielsweise der Einsatz von PTC.-Elementen. Ein anderer Ansatz ist die Nutzung von Verlustwärme anderer Komponenten im Kraftfahrzeug.

Ein solcher Ansatz ist beispielsweise aus der DE 10 2021 128 931 A1 bekannt, der die Verlustleistung eines Wechselrichters verwendet. Dabei wird vorgeschlagen, im Vorwärtsbetrieb die Leistungshalbleiter mit einer reduzierten Gate-Source-Spannung zu betreiben, d.h. die Leistungshalbleiter werden im Linear-Betrieb betrieben, um so durch den erhöhten Durchlasswiderstand mehr Verlustwärme zu erzeugen. Die Leistungshalbleiter sind beispielsweise SiC-Transistoren. Je nach gewünschter Heizleistung kann dann die Gate-Source-Spannung reduziert werden. Ein Problem dabei ist, dass es aufgrund der Zellenstruktur derartiger Leistungshalbleiter zu einer lokalen Überhitzung des Leistungshalbleiters kommen kann.

Der Erfindung liegt das technische Problem zugrunde, eine Vorrichtung zum Heizen einer Traktionsbatterie unter Ausnutzung von Verlustwärme elektrischer Komponenten zu verbessern sowie ein zugehöriges Verfahren zur Verfügung zu stellen.

Die Lösung des technischen Problems ergibt sich durch eine Vorrichtung mit den Merkmalen des Anspruchs 1 sowie ein Verfahren mit den Merkmalen des Anspruchs 8. Weitere vorteilhafte Ausgestaltungen der Erfindung ergeben sich aus den Unteransprüchen.

Die Vorrichtung zum Heizen einer Traktionsbatterie für ein Elektro- oder Hybridfahrzeug weist mindestens eine Einrichtung zur Erfassung oder Ermittlung einer Temperatur der Traktionsbatterie, einen Kühlkreislauf und mindestens eine elektrische Komponente mit mindestens einem GaN- oder SiC-Leistungstransistor auf, wobei die Traktionsbatterie und die elektrische Komponente mit dem Kühlkreislauf thermisch gekoppelt sind. Dabei ist die elektrische Komponente derart ausgebildet, dass in einem Betriebszustand der mindestens eine GaN- oder SiC-Leistungstransistor in Rückwärtsrichtung betrieben wird. Dabei ist eine Steuereinrichtung des mindestens einen GaN- oder SiC-Leistungstransistors derart ausgebildet, in Abhängigkeit der Temperatur der Traktionsbatterie den GaN- oder SiC-Leistungstransistor in Rückwärtsrichtung für eine vorbestimmte Zeit keine Gate-Source-Spannung zuzuführen, wobei die vorbestimmte Zeit größer als eine initiale Delay-Zeit ist. Hierdurch kann sehr effektiv viel Verlustwärme erzeugt werden. Dabei wird ausgenutzt, dass GaN-Leistungstransistoren keine Body-Diode aufweisen, allerdings ein ähnliches Verhalten aufweisen. SiC-Leistungstransistoren haben eine Body-Diode, deren Verhalten aber deutlich schlechter als bei Si-Leistungstransistoren ist. Daher ist es üblich, in Rückwärtsrichtung eine Gate-Source-Spannung anzulegen, umso den Durchgangswiderstand in Rückwärtsrichtung zu reduzieren. Dabei sind Schaltungskonfigurationen (z.B. eine Halbbrücke in Wechselrichter) möglich, wo für eine initiale Delay-Zeit keine Gate-Source-Spannung angelegt wird, um so einen Kurzschluss zu vermeiden. Eine solche initiale Delay-Zeit kann z.B. 100 ns sein. Es sind aber auch Schaltungskonfigurationen möglich, wo durch den Rückwärtsbetrieb keine Kurzschlüsse zu befürchten sind. In diesem Fall kann die initiale Delay-Zeit auch null sein. Erfindungsgemäß wird nun die Zeit, in der der GaN- oder SiC-Leistungstransistor ohne Gate-Source-Spannung in Rückwärtsrichtung betrieben wird, verlängert, wobei im Extremfall während der kompletten Phase in Rückwärtsrichtung die Gate-Source-Spannung null ist.

In einer Ausführungsform weist die Vorrichtung eine Spannungsmesseinrichtung auf, um die Drain-Source-Spannung zu messen, um so die Verlustleistung durch Multiplikation mit dem Strom genauer zu bestimmen.

In einer weiteren Ausführungsform weist die Vorrichtung eine Einheit zur Ermittlung einer Junction-Temperatur des mindestens einen GaN- oder SiC-Leistungstransistors auf, wobei die Steuereinrichtung derart ausgebildet ist, in Abhängigkeit der ermittelten Junction-Temperatur die vorbestimmte Zeit zu verkleinern. Durch die Erwärmung nimmt der Durchlasswiderstand zu, sodass mehr Verlustwärme erzeugt wird. Wird dann der Leistungstransistor wiederholt in Rückwärtsrichtung betrieben, was bei einem Freilauf in einem Wechselrichter der Fall ist, kann es dann notwendig sein, die vorbestimmte Zeit in einer Rückwärtsrichtungs-Phase wieder zu verkürzen, um so zu verhindern, dass die Junction-Temperatur eine kritische Grenze erreicht.

In einer weiteren Ausführungsform ist die Vorrichtung derart ausgebildet, dass in Abhängigkeit der Temperatur der Traktionsbatterie einer Heizleistung ermittelt wird, wobei die Steuereinrichtung derart ausgebildet ist, in Abhängigkeit der benötigten Heizleistung die vorbestimmte Zeit einzustellen. In die Berechnung der Heizleistung geht dabei vorzugsweise die Kühlwassertemperatur ein. Dabei kann die Ermittlung der Heizleistung kontinuierlich sein, sodass die Steuereinrichtung jeweils vor Einleitung der Rückwärtsrichtung abfragen kann, ob noch Heizleistung benötigt wird. Wird keine Heizleistung mehr benötigt, wird der Leistungstransistor wieder mit seiner initialer Delay-Zeit angesteuert.

In einer weiteren Ausführungsform ist die elektrische Komponente ein Pulswechselrichter und/oder ein DC/DC-Wandler und/oder ein On-Board-Charger. Durch die Vielzahl von Leistungstransistoren in diesen Komponenten kann so entsprechend viel Verlustleistung erzeugt werden.

In einer weiteren Ausführungsform weist die elektrische Komponente GaN- und SiC-Leistungstransistoren auf.

In einer weiteren Ausführungsform ist der Pulswechselrichter als 3-Level T-Type Pulswechselrichter ausgebildet, wobei die GaN-Leistungstransistoren an einem Neutralpunkt angeordnet sind. Die anderen Leistungstransistoren können dann als SiC- oder als Si-IGBTs ausgebildet sein.

Das Verfahren zum Heizen einer Traktionsbatterie für ein Elektro- oder Hybridfahrzeug erfolgt mittels mindestens einer Einrichtung zur Erfassung oder Ermittlung einer Temperatur der Traktionsbatterie, eines Kühlkreislaufes und mindestens einer elektrischen Komponente mit mindestens einem GaN- oder SiC-Leistungstransistor, wobei die Traktionsbatterie und die elektrische Komponente mit dem Kühlkreislauf thermisch gekoppelt sind. Dabei wird in einem Betriebszustand der mindestens eine GaN- oder SiC-Leistungstransistor in Rückwärtsrichtung betrieben, wobei eine Steuereinrichtung des mindestens einen GaN- oder SiC-Leistungstransistors in Abhängigkeit der Temperatur der Traktionsbatterie dem GaN- oder SiC-Leistungstransistor für eine vorbestimmte Zeit in der Rückwärtsrichtung keine Gate-Source-Spannung zuführt, wobei die vorbestimmte Zeit größer als eine initiale Delay-Zeit ist.

Hinsichtlich der weiteren Ausgestaltung des Verfahrens wird vollinhaltlich auf die vorangegangenen Ausführungen Bezug genommen.

Die Erfindung wird nachfolgend anhand bevorzugter Ausführungsformen näher erläutert. Die Figuren zeigen:

Fig. 1    eine schematische Darstellung eines Traktionsnetzes eines Elektro- oder Hybridfahrzeugs,

Fig. 2    eine schematische Darstellung eines Wechselrichters mit GaN-Leistungstransistoren und

Fig. 3    eine schematische Darstellung eines 3-Level T-Type Pulswechselrichters mit GaN-Leistungstransistoren an einem Neutralpunkt.

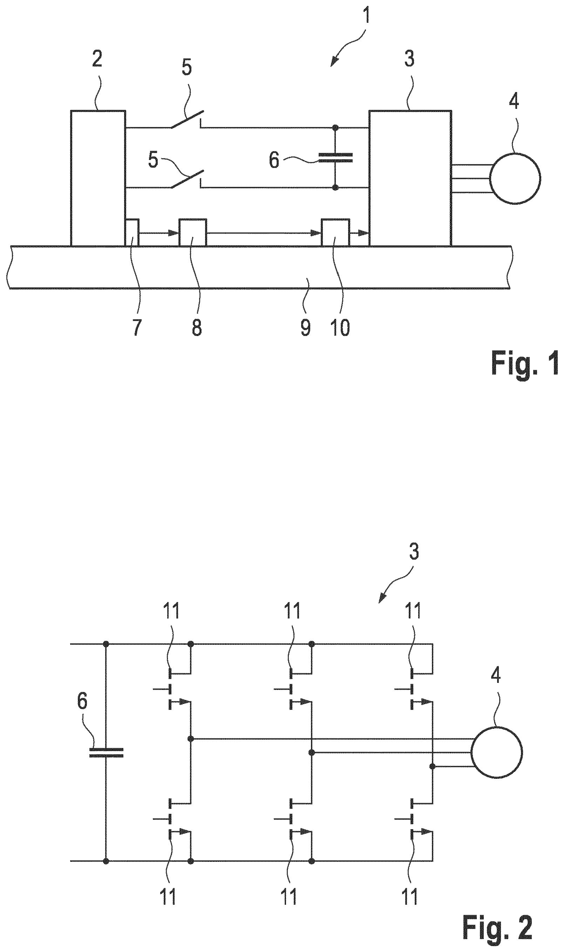

In der Fig. 1 ist schematisch ein Traktionsnetz 1 eines Elektro- oder Hybridfahrzeugs dargestellt. Das Traktionsnetz 1 weist eine Traktionsbatterie 2, einen Pulswechselrichter 3 und eine Elektromaschine 4 auf. Die Traktionsbatterie 2 ist über Relais 5 mit der Gleichspannungsseite des Pulswechselrichters 3 verbunden, wobei parallel mindestens ein Zwischenkreiskondensator 6 angeordnet ist. Weiter weist das Traktionsnetz 1 eine Einrichtung 7 zur Erfassung der Temperatur der Traktionsbatterie 2 auf. Die Einrichtung 7 kann beispielsweise mindestens ein Temperatursensor sein. Dabei kann die Einrichtung 7 auch mehrere Temperatursensoren aufweisen, die verschiedenen Batteriezellen der Traktionsbatterie 2 zugeordnet sind. Dabei kann vorgesehen sein, dass die verschiedenen Temperaturwerte gemittelt werden oder aber die niedrigste Temperatur als Temperatur der Traktionsbatterie 2 festgelegt wird. Weiter ist eine Einrichtung 8 vorgesehen, die anhand der Temperatur der Traktionsbatterie 2 und der Temperatur eines Kühlmittels eines Kühlkreislaufes 9 eine Heizleistung ermittelt, die dem Kühlkreislauf zugeführt werden muss, um die Traktionsbatterie 2 auf eine gewünschte Soll-Temperatur aufzuheizen. Dabei sind die Traktionsbatterie 2 und der Pulswechselrichter 3 mit dem Kühlkreislauf 9 thermisch gekoppelt. Die ermittelte Heizleistung wird an eine Steuereinrichtung 10 für die Leistungstransistoren des Pulswechselrichters 3 übergeben. Die Leistungstransistoren sind als GaN- oder SiC-Leistungstransistoren ausgebildet.

In der Fig. 2 ist beispielsweise ein Pulswechselrichter 3 mit GaN-Leistungstransistoren 11 dargestellt. Im motorischen Betrieb werden die GaN-Leistungstransistoren 11 in Vorwärtsrichtung betrieben und im Rekuperationsbetrieb in Rückwärtsrichtung. Technologisch bedingt weisen GaN-Leistungstransistoren 11 keine Body-Diode auf, über die bei Si-IGBTs der Freilauf erfolgen kann. Allerdings weisen GaN-Leistungstransistoren ein Body-Dioden-ähnliches Verhalten auf. Allerdings ist der Widerstand sehr groß, sodass bereits bei kleinen Strömen große Verlustleistungen erzeugt werden. Im normalen Betrieb (wenn also nicht geheizt werden soll) werden daher eine Gate-Source-Spannung angelegt, um den Widerstand in Rückwärtsrichtung zu reduzieren. Dabei ist weiter vorgesehen, dass eine initiale Delay-Zeit vorgesehen ist, bevor die Gate-Source-Spannung angelegt wird. Diese initiale Delay-Zeit dient dazu zu verhindern, dass gleichzeitig beide GaN-Leistungstransistoren 11 einer Halbbrücke leitend sind, was zu einem Kurzschluss führen würde. Diese initiale Delay-Zeit beträgt beispielsweise 100 ns. Zum Heizen der Traktionsbatterie 2 wird nun diese Delay-Zeit verlängert und gezielt die schlechte Rückwärtsleitfähigkeit ausgenutzt, um Verlustwärme zu erzeugen. Verstärkt wird dieser Effekt, dass bei gleichem Strom die Drain-Source-Spannung mit steigender Temperatur steigt, sodass die Verluste noch größer werden. Die erzeugte Verlustwärme kann bei bekanntem Strom leicht bestimmt werden. Die zugehörige Drain-Source-Spannung kann entweder als Look-up-Tabelle aus den Datenblättern entnommen werden oder mittels einer Spannungsmesseinrichtung gemessen werden. Die vorbestimmte Zeit wird dabei von der Steuereinrichtung 10 (siehe Fig. 1) den nicht dargestellten Gate-Treibern der GaN-Leistungstransstoren 11 übermittelt.

Allgemein gilt für die Verlustleistung einer Halbbrücke

$$P_{SD\text{-}HB} = (I_L \cdot V_{SD1} \cdot t_{SD1}) \cdot f_{SW} + (I_L \cdot V_{SD2} \cdot t_{SD2}) \cdot f_{SW}$$

Dabei ist $I_L$ der Laststrom bzw. Drainstrom, $V_{SD1}$ die Drain-Source-Spannung über dem oberen GaN-Leistungstransistor 11 in Rückwärtsrichtung und $V_{SD2}$ die Drain-Source-Spannung über dem unteren GaN-Leistungstransistor 11. $t_{SD1}$ ist die Zeit, in der keine Gate-Source-Spannung an dem oberen GaN-Leistungstransistor 11 anliegt und $t_{SD2}$ ist die Zeit, in der keine Gate-Source-Spannung an dem unteren GaN-Leistungstransistor 11 anliegt. $f_{SW}$ ist die Taktfrequenz, mit der zwischen oberem und unterem GaN-Leistungstransistor 11 geschaltet wird, die abhängig von der Frequenz der generierten Wechselspannung der Elektromaschine gewählt wird. $t_{SD1}$ bzw. $t_{SD2}$ entsprechen dabei der vorbestimmten Zeit. Werden $t_{SD1}$ und $t_{SD2}$ jeweils als halbe Periodendauer gewählt, so gilt

$$\frac{1}{t_{SD1} + t_{SD2}} = f_{SW}$$

d.h. die GaN-Leistungstransistoren 11 werden dauerhaft ohne Gate-Source-Spannung in Rückwärtsrichtung betrieben.
Ein solcher Pulswechselrichter 3 kann beispielsweise bei einem Laststrom von 500 A bei $V_{SD}$ = 2 V jeweils 1 kW Verlustleistung pro Halbbrücke erzeugen, wenn die GaN-Leistungstransistoren 11 dauerhaft ohne Gate-Source-Spannung in Rückwärtsrichtung betrieben werden. Durch Einstellung der vorbestimmten Zeit kann so die gewünschte Heizleistung eingestellt werden. Das Heizen kann dann solange erfolgen, bis die Traktionsbatterie 2 die gewünschte Temperatur hat. Dann können die GaN-Leistungstransistoren 11 wieder mit ihrer initialen Delay-Zeit betrieben werden. Die Ausführungen gelten sinngemäß auch für SiC-Leistungstransistoren. Dabei ist die Junction-Temperatur der Leistungstransistoren zu überwachen, um sicherzustellen, dass diese nicht kritische Werte erreicht.

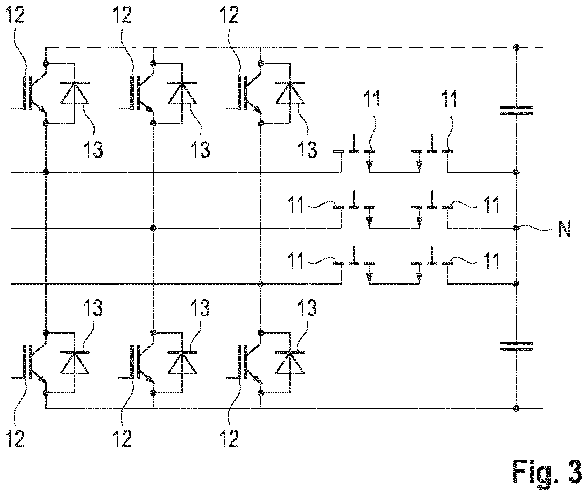

In der Fig. 3 ist eine alternative Ausführungsform eines Wechselrichters 3 dargestellt, der als 3-Level T-Type Wechselrichter ausgebildet ist. Dabei sind die High-Side-Schalter und die Low-Side-Schalter als Si-IGBTs 12 mit Body-Diode 13 ausgebildet, wobei im Neutralpfad mit dem Neutralpunkt N jeweils zwei gegensinnig verschaltete GaN-Leistungstransistoren 11 angeordnet sind. Die jeweils gegensinnig verschalteten GaN-Leistungstransistoren 11 können auch durch jeweils einen bidirektionalen GaN-Leistungstransistor 11 ersetzt werden. Anstelle der Si-IGBTs können auch SiC-Leistungstransistoren verwendet werden, sodass noch mehr Verlustleistung erzeugt werden kann.

**Bezugszeichenliste**

1    Traktionsnetz
2    Traktionsbatterie
3    Pulswechselrichter
4    Elektromaschine
5    Relais
6    Zwischenkreiskondensator
7    Einrichtung
8    Einrichtung
9    kühlkreislauf
10   Steuereinrichtung
11   GaN-Leistungstransistor
12   Si-IGBT
13   Body-Diode

**Patentansprüche**

1.   Vorrichtung zum Heizen einer Traktionsbatterie (2) für ein Elektro- oder Hybridfahrzeug, wobei die Vorrichtung mindestens eine Einrichtung (7) zur Erfassung oder Ermittlung einer Temperatur der Traktionsbatterie (2), einen Kühlkreislauf (9) und mindestens eine elektrische Komponente mit mindestens einem GaN-Leistungstransistor (11) oder SiC-Leistungstransistor aufweist, wobei die Traktionsbatterie (2) und die elektrische Komponente mit dem Kühlkreislauf (9) thermisch gekoppelt sind, wobei in einem Betriebszustand der mindestens eine GaN- oder SiC-Leistungstransistor in Rückwärtsrichtung betrieben wird, wobei eine Steuereinrichtung (10) des mindestens einen GaN- oder SiC-Leistungstransistor derart ausgebildet ist, in Abhängigkeit der Temperatur der Traktionsbatterie (2) den GaN- oder SiC-Leistungstransistor für eine vorbestimmte Zeit in Rückwärtsrichtung keine Gate-Source-Spannung zuzuführen, wobei die vorbestimmte Zeit größer als eine initiale Delay-Zeit ist.

2.   Vorrichtung nach Anspruch 1, **dadurch gekennzeichnet, dass** eine Spannungsmesseinrichtung zur Messung der Drain-Source-Spannung vorgesehen ist.

3.  Vorrichtung nach Anspruch 1 oder 2, **dadurch gekennzeichnet, dass** die Vorrichtung eine Einheit zur Ermittlung einer Junction-Temperatur des mindestens einen GaN- oder SiC-Leistungstransistors aufweist, wobei die Steuereinrichtung (10) derart ausgebildet ist, in Abhängigkeit der ermittelten Junction-Temperatur die vorbestimmte Zeit zu verkleinern.

4.  Vorrichtung nach einem der vorangegangenen Ansprüche, **dadurch gekennzeichnet, dass** die Vorrichtung derart ausgebildet ist, dass in Abhängigkeit der Temperatur der Traktionsbatterie (2) eine Heizleistung ermittelt wird, wobei die Steuereinrichtung (10) derart ausgebildet6 ist, in Abhängigkeit der benötigten Heizleistung die vorbestimmte Zeit einzustellen.

5.  Vorrichtung nach einem der vorangegangenen Ansprüche, **dadurch gekennzeichnet, dass** die elektrische Komponente ein Pulswechselrichter (3) und/oder ein DC/DC-Wandler und/oder ein On-Board-Charger ist.

6.  Vorrichtung nach einem der vorangegangenen Ansprüche, **dadurch gekennzeichnet, dass** die elektrische Komponente GaN- und SiC-Leistungstransistoren aufweist.

7.  Vorrichtung nach einem der Ansprüche 5 oder 6, **dadurch gekennzeichnet, dass** der Pulswechselrichter (3) als 3-Level T-Type Pulswechselrichter ausgebildet ist, wobei die GaN-Leistungstransistoren (11) an einem Neutralpunkt (N) angeordnet sind.

8.  Verfahren zum Heizen einer Traktionsbatterie (2) für ein Elektro- oder Hybridfahrzeug, mittels mindestens einer Einrichtung (7) zur Erfassung oder Ermittlung einer Temperatur der Traktionsbatterie (2), eines Kühlkreislaufes (9) und mindestens einer elektrischen Komponente mit mindestens einem GaN-Leistungstransistor (11) oder SiC-Leistungstransistor, wobei die Transistorbatterie (2) und die elektrische Komponente mit dem Kühlkreislauf (9) thermisch gekoppelt sind, wobei in einem Betriebszustand der mindestens eine GaN- oder SiC-Leistungstransistor in Rückwärtsrichtung betrieben wird, wobei eine Steuereinrichtung (10) des mindestens einen GaN- oder SiC-Leistungstransistors in Abhängigkeit der Temperatur der Traktionsbatterie (2) den GaN- oder SiC-Leistungstransistor für eine vorbestimmte Zeit in Rückwärtsrichtung keine Gate-Source-Spannung zuführt, wobei die vorbestimmte Zeit größer als eine initiale Delay-Zeit ist.

9.  Verfahren nach Anspruch 8, **dadurch gekennzeichnet, dass** in Abhängigkeit der Temperatur der Traktionsbatterie (2) eine Heizleistung ermittelt wird, wobei die Steuereinrichtung (10) in Abhängigkeit der benötigten Heizleistung die vorbestimmte Zeit einstellt.

Fig. 1

Fig. 2

Fig. 3

**Europäisches Patentamt**
**European Patent Office**
**Office européen des brevets**

## EUROPÄISCHER RECHERCHENBERICHT

Nummer der Anmeldung

EP 25 18 0093

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | DE 10 2021 128931 A1 (AUDI AG [DE]) 11. Mai 2023 (2023-05-11) | 1,2,4-6, 8,9 | INV. B60L58/27 H02M7/487 |
| Y | * Absätze [0002], [0011], [0019], [0021] * * Absatz [0026] - Absatz [0029] * * Absätze [0039], [0045], [0048], [0050], [0054] * * Abbildungen 1, 3 * | 3,7 | |
| Y | ----- DE 10 2021 200902 A1 (VOLKSWAGEN AG [DE]) 4. August 2022 (2022-08-04) * Absatz [0012] * | 3 | |
| Y | ----- DE 10 2021 003941 A1 (DEEPDRIVE GMBH [DE]) 2. Februar 2023 (2023-02-02) * Absätze [0032], [0040] * * Abbildung 4 * ----- | 7 | |

| | RECHERCHIERTE SACHGEBIETE (IPC) |
|---|---|
| | B60L H02M |

Der vorliegende Recherchenbericht wurde für alle Patentansprüche erstellt

| Recherchenort | Abschlußdatum der Recherche | Prüfer |
|---|---|---|
| Den Haag | 23. Oktober 2025 | Lutz, Tobias |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
..........................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 25 18 0093

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

23-10-2025

| Im Recherchenbericht angeführtes Patentdokument | Datum der Veröffentlichung | Mitglied(er) der Patentfamilie | Datum der Veröffentlichung |
|---|---|---|---|
| DE 102021128931 A1 | 11-05-2023 | CN 116094360 A | 09-05-2023 |
| | | DE 102021128931 A1 | 11-05-2023 |
| DE 102021200902 A1 | 04-08-2022 | CN 114834318 A | 02-08-2022 |
| | | DE 102021200902 A1 | 04-08-2022 |
| DE 102021003941 A1 | 02-02-2023 | CN 117501616 A | 02-02-2024 |
| | | DE 102021003941 A1 | 02-02-2023 |
| | | EP 4315589 A2 | 07-02-2024 |
| | | JP 2024528124 A | 26-07-2024 |
| | | KR 20240005029 A | 11-01-2024 |
| | | US 2024291396 A1 | 29-08-2024 |
| | | WO 2023006441 A2 | 02-02-2023 |

Für nähere Einzelheiten zu diesem Anhang : siehe Amtsblatt des Europäischen Patentamts, Nr.12/82

EPO FORM P0461

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102021128931 A1